# EUROPÄISCHE PATENTSCHRIFT

(11) **EP 4 653 711 B1**
(45) Veröffentlichungstag und Bekanntmachung des Hinweises auf die Patenterteilung: **07.10.2026**
(21) Anmeldenummer: 25176538.4
(22) Anmeldetag: 15.05.2025
(51) Int. Cl.: F16B 5/01, F16B 5/06

(54) **ECKVERBINDUNG VON SANDWICHPLATTEN**
CORNER JOINT OF SANDWICH PANELS
ASSEMBLAGE D'ANGLE DE PANNEAUX SANDWICH

(30) Priorität: 21.05.2024 DE 102024114125
(43) Veröffentlichungstag der Anmeldung: 26.11.2025
(73) Patentinhaber: Diehl Aviation Laupheim GmbH, 88471 Laupheim (DE)
(72) Erfinder: Steinmayer, Marc, 88400 Biberach an der Riss (DE); Sießegger, Daniel, 88480 Achstetten (DE); Pfinder, Dirk, 88481 Balzheim (DE)
(74) Vertreter: Diehl Patentabteilung

(56) Entgegenhaltungen:
- DE-A1- 102018 117 370
- FR-A1- 3 040 679
- US-B2- 10 597 866

## Beschreibung

Die Erfindung betrifft eine Eckverbindung von zwei Sandwichplatten, d.h. dass eine erste Sandwichplatte mit ihrer Stirnseite an einer Flachseite einer zweiten Sandwichplatte anliegt und beide Sandwichplatten dort miteinander verbunden sind.

Aus der DE 10 2007 041 282 A1 ist eine Sandwichbauteilanordnung in L-Form bekannt. Diese umfasst eine erste Sandwichplatte mit einem ersten Wabenkern, dessen Ober- und Unterseite jeweils mit einer Decklage versehen ist, von denen eine Decklage eine innere Decklage und die andere Decklage eine äußere Decklage bildet, sowie eine zweite Sandwichplatte mit einem zweiten Wabenkern, dessen Ober- und Unterseite jeweils mit einer Decklage versehen ist, von denen ebenfalls eine Decklage eine innere Decklage und die andere Decklage eine äußere Decklage bildet. Wenigstens eine Schmalseite der zweiten Sandwichplatte ist zur Bildung einer L-förmigen Anordnung mit der ersten Sandwichplatte verbunden. Zur Erhöhung der Verbindungsfestigkeit und zur Gewichtseinsparung ist im Verbindungsbereich zwischen der ersten Sandwichplatte und der zweiten Sandwichplatte einerseits die innere Decklage der ersten Sandwichplatte mit der inneren Decklage der zweiten Sandwichplatte und andererseits die äußere Decklage der ersten Sandwichplatte mit der äußeren Decklage der zweiten Sandwichplatte überlappend verbunden. Ferner ist zwischen jeder mit der ersten Sandwichplatte verbundenen Schmalseite der zweiten Sandwichplatte und der ersten Sandwichplatte eine Schicht aus Expansionsklebstoff angeordnet.

Aus der US 10 597 866 B2 ist folgendes bekannt: Eine Paneelbaugruppe kann ein erstes Paneel umfassen, mit einer Umfangsseite zwischen einer oberen und einer unteren Fläche des ersten Paneels und einer ersten Öffnung. Die Paneelbaugruppe kann auch ein zweites Paneel umfassen, mit einer zweiten Öffnung. Ein länglicher Einsatz kann mit dem ersten Paneel gekoppelt werden. Der längliche Einsatz weist eine Kopplungsseite auf, wobei die erste Öffnung des ersten Paneels so dimensioniert und geformt sein kann, dass sie den länglichen Einsatz koppelbar aufnehmen kann, und zwar so, dass die Kopplungsseite proximal zur Umfangsseite positioniert ist. Die Paneelbaugruppe kann auch einen Befestigungseinsatz umfassen, wobei die zweite Öffnung des zweiten Paneels so dimensioniert und geformt sein kann, dass sie den Befestigungseinsatz aufnehmen kann. Ein Befestigungselement kann von dem Befestigungseinsatz und dem länglichen Einsatz aufgenommen werden, wobei das Befestigungselement das erste Paneel über den Befestigungseinsatz und den länglichen Einsatz mit dem zweiten Paneel verbindet. Es werden auch verwandte Methoden zur Montage der Paneelbaugruppe bereitgestellt.

Aufgabe der vorliegenden Erfindung ist es, Verbesserungen in Bezug auf eine derartige Eckverbindung anzugeben.

Die Aufgabe wird gelöst durch eine Sandwichanordnung gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Sandwichanordnung ist eine solche für einen Innenraum eines Flugzeuges. Mit anderen Worten ist die Sandwichanordnung bestimmungsgemäß im Innenraum eines Flugzeuges einzusetzen bzw. dort zu montieren.

Der Innenraum ist insbesondere eine Passagierkabine eines Flugzeuges, das Flugzeug insbesondere ein Passagierflugzeug. Die Sandwichanordnung ist insbesondere zumindest Teil eines Einbauteils für das Flugzeug. Das Einbauteil ist insbesondere ein Gepäckfach oder ein Teil dessen, insbesondere ein im Innenraum des Flugzeuges fest zu verbauender Grundkörper / Grundträger eines Gepäckfaches. Alternativ kann das Einbauteil auch eine Lavatory, Galley, Stowage oder Crew Rest Compartment bzw. ein Teil der genannten Monumente sein.

"Bestimmungsgemäß" heißt, dass die Sandwichanordnung auf bestimmte oder bestimmte Typen von Innenräumen bzw. Flugzeugen konstruktiv abgestimmt ist und für den Einsatz dort eingerichtet ist; z.B. für die dadurch bestimmten Geometrie-, Material- und Systemanforderungen usw. ausgelegt ist. Mit anderen Worten werden insbesondere betreffende Innenräume bzw. Flugzeuge als bekannt hinsichtlich entsprechender Eigenschaften vorausgesetzt.

Der Begriff "Flugzeug" ist hier weit zu verstehen und schließt Fluggeräte aller Art, insbesondere Passagierflugzeuge, jedoch z.B. auch Hubschrauber, Kleinflugzeuge, Privatjets, Lufttaxis usw. ein. Die Erfindung ist jedoch auch auf die Ausstattung von Innenräumen anderer Fahrzeuge mit Sandwichanordnungen übertragbar, wie zum Beispiel Busse, Bahnen, Schiffe usw.. Weiterhin ist die Erfindung generell auch für jedwede Gegenstände nutzbar, die eine derartige Verbindung von Sandwichplatten erfordern.

Die Sandwichanordnung enthält eine erste Sandwichplatte und eine zweite Sandwichplatte. Jede der Sandwichplatten erstreckt sich jeweils flächig entlang einer Erstreckungsebene. Diese muss nicht unbedingt vollständig eben sein, sondern kann auch gekrümmt verlaufen, ist dann also eine Erstreckungsfläche. Unter "Sandwichplatte" ist hierbei jegliche Form von Sandwichaufbau angesprochen, welcher einen sich flächenhaft erstreckenden Kern aufweist, der insbesondere ein Schaum- oder Wabenkern ist. Insbesondere ist der Kern auf wenigstens einer, insbesondere auf beiden Flachseiten von je einer Deckschicht bedeckt. Die Deckschicht ist insbesondere mechanisch stabil, vor allem druckstabil senkrecht zur Flächenerstreckung ausgeführt.

Wenigstens die erste Sandwichplatte, insbesondere beide Sandwichplatten, sind bzw. werden in einem Rohzustand hergestellt und befinden sich dann zunächst in einem Rohzustand. Aus dem Rohzustand werden die Sandwichplatten dann zeitlich nachfolgend in einen Fertigzustand gebracht bzw. überführt. In diesem ist die Sandwichplatte dann entlang einer Schnittfläche gegenüber dem Rohzustand beschnitten. Ein solcher Beschnitt erfolgt quer (senkrecht oder z.B. in einem Winkel von +/- 20°) zur Erstreckungsebene. Durch das Beschneiden der Sandwichplatte entsteht an der Schnittlinie bzw. Schnittfläche eine Stirnseite der Sandwichplatte.

Mit anderen Worten wird ausgehend vom Rohzustand also ein Teil der Sandwichplatte abgeschnitten bzw. entfernt, um diese in den Fertigzustand zu bringen.

Mit der zweiten Sandwichplatte kann entsprechend verfahren werden. Alternativ kann diese jedoch auch gleich im Fertigzustand hergestellt sein bzw. werden.

"Beschnitt" etc. ist hier weit zu verstehen und meint jegliche Form des Entfernens / Abtragens eines Teils der Sandwichplatte. Somit kann auch z.B. ein Abfräsen / Abschleifen, Ablösen usw. erfolgen.

Die Stirnseite muss daher auch nicht glatt / eben ausgeführt sein, sondern kann z.B. Vorsprünge / Rücksprünge / sonstige Konturen (siehe unten "Passkontur") enthalten.

Im Fertigzustand weisen beide Sandwichplatten jeweils zwei gegenüberliegende Flachseiten und je mindestens eine Stirnseite auf, wobei die Stirnseite die beiden Flachseiten verbindet. Mit anderen Worten enden die beiden Flachseiten jeweils an der Stirnseite, diese gehen also ineinander über bzw. grenzen aneinander an. Insbesondere enthalten die Sandwichplatten mehrere Stirnseiten, wobei vorliegend jeweils stellvertretend und der Einfachheit halber nur eine Stirnseite der Sandwichplatten angesprochen ist. Insbesondere ist an der Stirnseite ein Kern der Sandwichplatte unbedeckt zugänglich.

In beide Sandwichplatten ist je ein Reibinsert eingebracht. Jedes der Reibinserts weist eine Zentralachse auf. Sowohl beim Einbringen als auch wenn die Reibinserts in die Sandwichplatten eingebracht sind, verläuft die Zentralachse quer, insbesondere senkrecht zur Erstreckungsebene der jeweiligen Sandwichplatte. Die Zentralachse bildet die Drehachse, um welche das Reibinserts beim Einbringen in die Sandwichplatte rotiert wird. Auch wird zum Einbringen Druck in Richtung der Zentralachse auf das Reibinsert ausgeübt. Die Zentralachse stellt auch gleich eine Symmetrieachse in Bezug auf die rotationssymmetrisch in Form der Reibinserts dar.

Derartige Reibinserts sind beispielsweise aus "'EJOT, EJOT TSSD, Das Verbindungselement für den Leichtbau', PDF-Dokument 'EJOT-TSSD-Flyer-01.23-de.pdf', Download am 14.05.2024 von https:// www. ejot. de/ Verbindungstechnik/ Anwendungsbereiche/ Automobilindustrie/ Karosserie/ EJOT-TSSD% C2% AE/ p/ VBT_ EPPSYS_ TSSDDownload" bekannt. Das Einbringen der Reibinserts in die Sandwichplatten im Rahmen der vorliegenden Erfindung erfolgt in fachüblicher Weise.

Das erste Reibinsert ist als ein Verbindungsziel in die erste Sandwichplatte - wenn sich diese im Rohzustand befindet - eingebracht. Die Einbringung erfolgt dabei derart, dass - wenn sich Sandwichplatte mit eingefügtem Reibinsert im Rohzustand befindet - das Reibinsert beiderseits der Schnittfläche liegt, also über die Schnittfläche hinausragt. Mit anderen Worten liegt also je ein Teil des Reibinserts auf je einer Seite der Schnittfläche bzw. ist das Reibinserts durch die Schnittfläche in zwei Abschnitte aufgeteilt. Beim Übergang in den Fertigzustand wird das Reibinsert damit ebenfalls entlang der Schnittfläche beschnitten. Das Reibinsert ist damit so in die erste Sandwichplatte eingebracht, dass es im Fertigzustand der ersten Sandwichplatte an der Stirnseite ebenfalls teilweise beschnitten ist. Mit anderen Worten wird bei dem Übergang der ersten Sandwichplatte (mit eingesetztem Reibinsert) an der Schnittfläche sowohl ein Teil der ersten Sandwichplatte als auch ein Teil des Reibinserts entfernt.

Die Reibinserts sind beim Einbringen in jeweilige Sandwichplatte zunächst vollständig in diesen aufgenommen. Die erste Sandwichplatte befindet sich dabei immer im Rohzustand. Die zweite Sandwichplatte kann sich beim Einsetzen des zweiten Reibinserts entweder im Rohzustand oder im Fertigzustand befinden. Im ersten Fall kann, muss aber nicht das zweite Reibinsert entsprechend dem ersten Reibinsert beim Beschneiden der zweiten Sandwichplatte ebenfalls mit beschnitten werden.

Mit anderen Worten verläuft also die Schnittfläche für den Beschnitt der ersten Sandwichplatte durch das erste Reibinsert. Dies kann auch für das zweite Reibinsert gelten, muss aber nicht. Abgeschnittene Reibinserts bilden damit einen Teil der Stirnfläche der betreffenden Sandwichplatte.

Das zweite Reibinsert ist als ein Verbindungspartner zu dem Verbindungsziel in die zweite Sandwichplatte eingebracht.

Die Einbringung im Roh- bzw. Fertigzustand unterliegt noch weiteren Bedingungen hinsichtlich der Platzierung der Reibinserts in den Sandwichplatten. Diese Bedingungen werden anhand eines (bei Einsetzen noch geplanten) Montagezustandes wie folgt erläutert:
In dem Montagezustand der Sandwichanordnung liegen beide Sandwichplatten im Fertigungszustand vor, also mit eingesetzten und in der ersten Platte definitiv, in der zweiten Platte optional beschnittenen Reibinserts. Weiterhin liegt im Montagezustand die erste Sandwichplatte mit ihrer Stirnseite an der ersten Flachseite der zweiten Sandwichplatte an.

Beide Reibinserts sind weiterhin beim oben bereits erläuterten Einbringen in die jeweilige Sandwichplatte derart bzw. noch nach folgenden Bedingungen in diese eingebracht: Im Montagezustand liegen beide Reibinserts zusammen auf einer Verbindungsstrecke bzw. sollen dort liegen. Dabei durchsetzt die Verbindungsstrecke das erste Reibinsert quer zu seiner Zentralachse und das zweite Reibinsert entlang seiner Zentralachse. "Quer" und "entlang" sind hierbei so zu verstehen, dass hierdurch insbesondere ein rechter Winkel (quer) bzw. Parallelität (entlang) angesprochen ist, jedoch auch eine jeweilige Toleranz hierzu von +/- 20° eingeschlossen ist.

Mit anderen Worten wird bei der Wahl des Einbringungsortes in die Sandwichplatten für die Reibinserts bereits berücksichtigt, dass sich die entsprechende geometrische Situation im Fertigzustand und im Montagezustand ergibt.

Im Montagezustand sind die beiden Sandwichplatten anhand eines Verbindungsmittels aneinander befestigt. Das Verbindungsmittel verbindet dabei die beiden Reibinserts mechanisch fest miteinander. Da die Reibinserts fest in den Sandwichplatten verankert sind, sind so auch die Sandwichplatten mechanisch fest miteinander verbunden.

Die entsprechende Verbindung anhand Verbindungsmittel und Reibinserts kann, muss jedoch nicht, die einzige Befestigung der beiden Sandwichplatten aneinander sein. Insbesondere können weitere Reibinsert-Paare in die Sandwichplatten nach der beschriebenen Art und Weise eingesetzt sein, die eine jeweilige lokale mechanische Verbindung bewirken. Alternativ oder zusätzlich können auch sonstige mechanische Verbindungsmittel, Verklebungen, Formschlüsse usw. vorgesehen sein, um die beiden Sandwichplatten in der Sandwichanordnung mechanisch aneinander zu befestigen.

Die Verbindungsstrecke ist insbesondere eine "Zentralstrecke", welche die beiden Reibinserts (gegebenenfalls im jeweils beschnittenen Zustand) jeweils zentral durchsetzt, insbesondere also mittig. So kann ein Verbindungsmittel, das entlang der Verbindungsstrecke eingebracht ist, zum Beispiel in Form einer entlang der Verbindungsstrecke verlaufenden Schraubverbindung, besonders gut im jeweiligen Reibinsert befestigt sein.

Das Verbindungsmittel ist insbesondere ein stiftartiges Verbindungsmittel wie z.B. eine Schraube, ein Niet, ein Stift / Bolzen usw.

Insbesondere weist mindestens eines der Reibinserts eine Durchbrechung, zum Beispiel Bohrung, für das Verbindungsmittel auf. Das Verbindungsmittel kann somit das mit der Durchbrechung versehene Reibinsert besonders einfach und gut durchsetzen bzw. in diesem befestigt werden. Im Montagezustand ist eine derartige Durchbrechung insbesondere auf das jeweils andere Reibinsert hin ausgerichtet. Die Durchbrechung verläuft insbesondere entlang der Verbindungsstrecke.

Gemäß der Erfindung ist eine besonders einfache, leichte und stabile Verbindung der beiden Sandwichplatten im Rahmen der Sandwichanordnung möglich.

Durch das Beschneiden des ersten Reibinserts bildet dieses einen Teil der Stirnfläche der ersten Sandwichplatte. Damit steht an dieser Stirnfläche eine definierte und mechanisch feste und stabile Anlage der Stirnfläche an der ersten Flachseite der zweiten Sandwichplatte zu Verfügung. Dies fördert die mechanische Stabilität der Verbindung der beiden Sandwichplatten.

Insbesondere ist das zweite Reibinsert an der ersten Flachseite der zweiten Sandwichplatte zugänglich. Beide Reibinserts liegen dann unmittelbar aneinander an, was zu einer besonders stabilen gegenseitigen Befestigung führt. Dies gilt auch, wenn zwischen den Reibinserts praktisch nur noch eine Deckschicht der zweiten Sandwichplatte liegt, das zweite Reibinsert also bis zur Deckschicht hin tief in die zweite Sandwichplatte eingebracht ist. Eine solche Deckschicht ist - im Gegensatz zum Kern - in der Regel mechanisch viel stabiler, insbesondere druckstabil (z.B. Glasfaser- / Prepreg-Schicht). Die mechanische Stabilität der Verbindung ist daher sehr gut.

Obschon die Erfindung der Einfachheit der Darstellung halber anhand nur zweier Sandwichplatten und eines Paares von Reibinserts erläutert ist, kann die Sandwichanordnung weitere Sandwichplatten und/oder Reibinsert-Paare enthalten. So kann eine Sandwichanordnung aus mehr als zwei Sandwichplatten geschaffen werden. Jeweilige Paare von Sandwichplatten können dann jeweils durch ein oder mehrere Paare von Reibinserts verbunden sind.

In einer bevorzugten Ausführungsform ist das zweite Reibinsert im Fertigzustand unbeschnitten. Somit steht das gesamte Reibinsert für die mechanische Verbindung der beiden Sandwichplatten zur Verfügung.

In einer bevorzugten Ausführungsform verläuft die Verbindungsstrecke vollständig innerhalb der Sandwichanordnung. So ist zum Beispiel sichergestellt, dass ein entlang der Verbindungsstrecke verlaufendes Verbindungsmittel, z.B. Schraubverbindung, zwischen beiden Reibinserts sich innerhalb der Sandwichanordnung befindet. Das Verbindungsmittel ist von außerhalb der Sandwichanordnung insofern nicht sichtbar. Dies führt zu einer optisch besonders ansprechenden Sandwichanordnung.

In einer bevorzugten Ausführungsform ist das Verbindungsmittel eine Schraube, welche das erste Reibinsert im Montagezustand zumindest teilweise und das zweite Reibinsert vollständig durchsetzt. Somit ist es möglich, die Schraube zunächst von der zweiten Flachseite her in das zweite Reibinsert einzubringen, dieses zu durchdringen und dann weiter zum ersten Reibinsert hin vordringend einzuschrauben. Ein Schraubenkopf ist dann insbesondere nur an der zweiten Flachseite der zweiten Sandwichplatte sichtbar (sichtverdeckter Abschnitt / keine Sichtseite, siehe unten).

In einer bevorzugten Ausführungsform sind die beiden Reibinserts jeweils von der zweiten Flachseite her in die jeweilige Sandwichplatte eingebracht. Insbesondere können so die ersten Flachseiten der jeweiligen Sandwichplatten (z.B. deren dortige Deckschichten) unversehrt und damit optisch besonders ansprechend verbleiben und zum Beispiel als Sichtseiten der Sandwichanordnung dienen. Andersherum betrachtet kann die Sandwichanordnung so beispielsweise derart im Innenraum des Flugzeuges angeordnet werden, dass die zweiten Flachseiten, zumindest im Bereich der Reibinserts, keine Sichtseiten der Sandwichanordnung sind und somit optisch nicht störend auffallen (zu Sichtseiten siehe auch unten).

In einer bevorzugten Ausführungsform sind die Sandwichplatten im Montagezustand bezüglich ihrer Erstreckungsebenen in einem Winkel zwischen 70° und 110° zueinander angeordnet, insbesondere 90°. Mit anderen Worten kann im Rahmen der Sandwichanordnung eine rechtwinklige oder zumindest annähernd rechtwinklige Eckverbindung der beiden Sandwichplatten realisiert werden. Insbesondere weist hierbei die Stirnseite der ersten Sandwichplatte den entsprechenden Winkel / Neigung zu den jeweiligen Flachseiten der ersten Sandwichplatte auf. So kann bei gegebenem Winkel die Stirnseite der ersten Sandwichplatte plan an der ersten Flachseite der zweiten Sandwichplatte anliegen. Somit sind besonders stabile Eckverbindungen zwischen den beiden Sandwichplatten möglich.

In einer bevorzugten Ausführungsform weisen im Fertigzustand der Sandwichplatten bzw. im Montagezustand der Sandwichanordnung das erste Reibinsert eine erste Passkontur und das zweite Reibinsert eine zweite Passkontur auf, wobei die Passkonturen zueinander korrespondieren, insbesondere gegenseitig ineinanderpassen. Die Passkonturen greifen dann im Montagezustand formschlüssig ineinander. Somit wird anhand der (mechanisch besonders stabilen) Reibinserts ein Formschluss von beiden Inserts und damit beiden Sandwichplatten erreicht. Die Passkonturen sind insbesondere zwischen Rohzustand und Fertigzustand durch den Beschnitt erzeugt. Der Beschnitt erfolgt dann streng genommen nicht mehr entlang einer Schnittfläche, sondern entlang einer Schnittform. Zum Beispiel wird der Beschnitt dann durch Fräsen und nicht durch tatsächliches Schneiden erzeugt.

Insbesondere ist eine der Passkonturen ein aus der Stirnseite vorspringender Vorsprung und die andere Passkontur eine von der korrespondierenden Flachseite zurückgesetzte Aufnahme für den Vorsprung oder umgekehrt. Derartige Passkonturen lassen sich besonders einfach herstellen.

In einer bevorzugten Ausführungsform weist wenigstens eine der Sandwichplatten - wenigstens am Einbringungsort des Reibinserts - ein Material - insbesondere Kernmaterial eines Kerns der Sandwichplatte - auf, das gleich dem Material des in die jeweilige Sandwichplatte einzusetzenden Reibinserts ist. Mit anderen Worten entsteht so durch Einsetzen des Inserts in der Sandwichplatte eine Monomaterialstruktur, die in Bezug auf Festigkeit, aber auch zum Beispiel in Bezug auf späteres Recycling der Sandwichanordnung besonders günstig ist.

Die Aufgabe der Erfindung wird auch gelöst durch ein Einbauteil gemäß Patentanspruch 9. Das Einbauteil ist ein solches für ein Flugzeug wie es oben bereits erläutert wurde. Das Einbauteil enthält die erfindungsgemäße Sandwichanordnung.

Das Einbauteil und zumindest ein Teil dessen möglicher Ausführungsformen sowie die jeweiligen Vorteile wurden sinngemäß bereits im Zusammenhang mit der erfindungsgemäßen Sandwichanordnung erläutert. Insbesondere bilden also die oben im Zusammenhang mit der Sandwichanordnung genannten bevorzugten Ausführungsformen auch bevorzugte Ausführungsformen des Einbauteils.

In einer bevorzugten Ausführungsform ist das Einbauteil zumindest ein Teil eines Gepäckfaches oder bildet ein gesamtes Gepäckfach. Unter "Gepäckfach" ist hier dessen Wandung / Grundstruktur / Grundkörper zu verstehen, also ohne sonstiger Teile wie z.B. funktionaler Teile (Scharniere, Dämpfer, Griffe etc.). Insbesondere ist das Einbauteil ein im Flugzeug fest zu verbauender / verbauter Grundkörper des Gepäckfaches, an welchen wiederum zum Beispiel eine bewegliche Schwenkklappe oder Ähnliches befestigt ist. Dank der Erfindung können somit besonders leichte und stabile Gepäckfächer für Flugzeuge realisiert werden.

In einer bevorzugten Ausführungsform weist das Einbauteil eine Wandung auf, welche beim bestimmungsgemäßen Einbau des Einbauteils im Flugzeug sichtverdeckt ist, d.h. für Personen, insbesondere Passagiere im Flugzeug bzw. Innenraum nicht einsehbar ist. Zumindest solche Abschnitte der zweiten Flachseiten, die die Reibinserts aufweisen, sind dann Teile der betreffenden Wandung. Somit sind, wie oben schon erläutert, die Reibinserts sichtverdeckt und somit optisch nicht störend im Flugzeug verbaut. Insbesondere können dann weitere Abschnitte der zweiten Flachseiten, die keine Reibinserts aufweisen und / oder Abschnitte der oder die vollständigen ersten Flachseiten einer oder beider Sandwichplatten Sichtseiten des Einbauteils im Flugzeug darstellen. Somit ist ein optisch besonders ansprechendes Einbauteil für das Flugzeug geschaffen.

Die Aufgabe der Erfindung wird auch gelöst durch ein Verfahren gemäß Anspruch 12. Dieses dient zum Herstellen der erfindungsgemäßen Sandwichanordnung oder des erfindungsgemäßen Einbauteils.

Bei dem Verfahren wird die erste Sandwichplatte im Rohzustand bereitgestellt. Das erste Reibinsert wird unter Rotation um seine Zentralachse fachüblich in die erste Sandwichplatte in Richtung quer zu deren Erstreckungsebene eingebracht. Das Einbringen erfolgt dabei derart, dass es über die Schnittfläche für den anschließenden Beschnitt der ersten Sandwichplatte hinausragt. Anschließend wird die erste Sandwichplatte einschließlich des inzwischen eingesetzten ersten Reibinserts entlang der Schnittfläche beschnitten, umso in den Fertigzustand zu gelangen. Dabei wird die Stirnfläche durch den Beschnitt ausgebildet.

Die zweite Sandwichplatte wird im Rohzustand oder im Fertigzustand bereitgestellt. Anschließend wird das zweite Reibinsert - wie das erste - unter Rotation um die Zentralachse in Richtung quer zu deren Erstreckungsebene in die zweite Sandwichplatte eingebracht. Gegebenenfalls (falls die zweite Sandwichplatte im Rohzustand bereitgestellt wurde) wird die zweite Sandwichplatte beschnitte und so in den Fertigzustand gebracht, gegebenenfalls einschließlich eines Beschnitts des ersten Reibinserts, wie oben erläutert.

Zur Schaffung des Montagezustands wird schließlich die erste Sandwichplatte mit ihrer Stirnseite an der ersten Flachseite der zweiten Sandwichplatte angelegt, wobei die Reibinserts auf der oben beschriebenen Verbindungsstrecke zu liegen kommen Schließlich werden die Sandwichplatten anhand des Verbindungsmittels aneinander befestigt. Dies geschieht, indem die in den Sandwichplatten festverankerten Reibinserts durch das Verbindungsmittel miteinander mechanisch fest verbunden werden.

Das Verfahren und zumindest ein Teil dessen möglicher Ausführungsformen sowie die jeweiligen Vorteile wurden sinngemäß bereits im Zusammenhang mit der erfindungsgemäßen Sandwichanordnung und dem erfindungsgemäßen Einbauteil erläutert. Insbesondere bilden also die oben im Zusammenhang mit der Sandwichanordnung und dem Einbauteil genannten bevorzugten Ausführungsformen auch bevorzugte Ausführungsformen des Verfahrens.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergeben sich insbesondere Reibinserts ohne Metallkern als Eckverbindungssystem als eine Art von Kernfüllmasse an Stirnflächen.

Insbesondere können in Sandwichstrukturen (Sandwichplatten) gesetzte Reibinserts durch eine gezielte nachfolgende Beschnittstufe (erste Inserts werden zum Teil abgeschnitten) als lokale Kernfüllmasse an Stirnflächen der Sandwichstrukturen dienen. Somit können hochfeste Eckverbindungen von Sandwichplatten durch insbesondere Verschraubung in die Stirnflächen realisiert werden.

Die Erfindung ermöglicht
- eine lösbare Schraubverbindung für Eckverbindungen von Sandwichstrukturen,
- eine Eckverbindung für thermoplastische und duroplastische Sandwichstrukturen, und
- eine Verbindungstechnik ohne aufwendige Verklebewerkzeuge.

Die Erfindung beruht auf der Beobachtung aus der Praxis, dass zur Verbindung von Sandwichplatten bekannt ist:
- Verkleben als Eckverbindung: Dies bedeutet einen hohen manueller Aufwand (Positionieren, Abkleben, etc.).
- Verschrauben in konventioneller Kernfüllmasse in Stirnfläche, welche im Vorfeld schon bei der Grundherstellung der Sandwichplatten (Herstellung des Rohzustandes) eingebracht werden muss. Dies führt zu einer großen Positionstoleranz der Kernfüllmasse im Sandwich. Außerdem folgt ein hohes Gewicht der Verbindungstechnik.

Die Erfindung beruht auf der Überlegung, dass Reibinserts auf wenige Zehntel mm im Nachgang zur Sandwichherstellung (wenn dieses im Rohzustand vorliegt) gesetzt werden. Daher kann die Verstärkung / Füllung des Sandwichkerns gezielt erfolgen, womit eine sehr leichte und dennoch hochfeste Verbindung erzielt werden kann.

Weiterhin können die insbesondere thermoplastischen Inserts sowohl in konventionelle duroplastische als auch in thermoplastische Sandwichstrukturen gesetzt werden. Bei thermoplastischem Sandwichaufbau können Inserts aus demselben Material (Thermoplast) verwenden werden. Somit kann ein Monomaterialeinsatz hinsichtlich besserer Recyklierbarkeit erreicht werden.

Gemäß der Erfindung
- wird ein manueller Aufwand in der Montage wird reduziert im Vergleich zu einer Verklebung,
- entfallen Verklebewerkzeuge oder werden minimiert im Vergleich zur Verklebung,
- erfolgt eine Gewichtsreduzierung im Vergleich zu einer Verschraubung in konventioneller Kernfüllmasse.

Grundidee der Erfindung ist die Nutzung von Reibinserts als Kernfüllmasse in der Stirnfläche einer Sandwichstruktur, um Schraubverbindungen in die Stirnflächen realisieren zu können.

So ist eine Schraubverbindung 90° (zwischen 70° und 110°) zur Setzrichtung der Inserts möglich. Aus der Praxis bekannt ist nur, dass Reibschweißinserts Verwendung zur Fixierung von Haltern / Kabelhaltern / etc. auf den Sandwichflächen finden.

Eine Schraubverbindung in Setzrichtung der Inserts wird hier vorgeschlagen.

Die Erfindung kann in Einbauten von Flugzeugen, z.B. Staufächern, Waschräumen (Lavatories) oder Bordküchen (Galleys) genutzt werden.

Gemäß der Erfindung ergeben sich Reibinserts als Eckverbindung.

Der Setzprozess der Reibinserts beruht fachüblich auf Rotation, Vorschub und Druck

Gemäß der Erfindung:
1. werden insbesondere Reibinserts (ohne Metallkern) rückseitig (zweite Flachseite) in ein unbeschnittenes Rohpanel (erste Sandwichplatte im Rohzustand) gesetzt,
2. erfolgt ein Beschnitt auf eine Endgeometrie des Rohteils (es entsteht die erste Sandwichplatte im Fertigzustand). Dabei wird das Reibinsert ebenfalls zum Teil beschnitten. Es ergibt sich so insbesondere eine geschlossene Wabe (aufgeschmolzener thermoplastischer Reibinsert) an der Stirnfläche. Insbesondere kann bereits hier eine Bohrung für eine Verschraubung auf der Stirnfläche der ersten Sandwichplatte am eingebrachten Insert (nach dem Beschnitt) vorgesehen werden. Vorzugsweise kann eine Bohrung während einer Fräsbearbeitung (Beschnitt) erfolgen.

### Weiterhin

1.) werden Reibinserts (ohne Metallkern oder zentraler Bohrung) rückseitig (zweite Flachseite) in ein insbesondere unbeschnittenes Rohpanel (zweite Sandwichplatte) gesetzt. Alternativ könnte im Reibinsert der zweiten Sandwichplatte ein Metallkern (erste Gewindegänge) oder auch ein zentrales Loch bereits vorgesehen sein. Je nachdem, ob dies aus Toleranzgründen hilfreich ist, oder nicht.
2. erfolgt dessen Beschnitt auf eine Endgeometrie des Rohteils (es ergibt sich der Fertigzustand). Eventuell kann eine zentrale Bohrung erst bei Beschnitt gesetzt werden. Je nach Insertdurchmesser / maximalem Panelüberstand wird auch hier ein Teil des (zweiten) Reibinserts beschnitten.

Gemäß der Erfindung ergeben sich insbesondere nur sichtbare Reibinserts auf Außenflächen (die keine Sichtflächen sind, zweite Flachseiten) und verdeckte Inserts auf Innenflächen, z.B. eines Gepäckfaches (Sichtflächen, erste Flachseiten).

Gemäß der Erfindung sind unterschiedliche Winkel zwischen den Sandwichplatten (90° +/- Toleranz, z.B. +/- 20°) realisierbar, durch ggf. schrägen Beschnitt der ersten Sandwichplatte und Wahl / Richtung einer Bohrung / Verschraubung).

Gemäß der Erfindung ist eine Positionierungshilfe / ein Formschluss beim Verschrauben der beiden Sandwichplatten aneinander möglich mittels speziellem Beschnitt (Fräse, Passkonturen) der Inserts.

Gemäß der Erfindung kann ein optionales Loch (Zentrale Ausnehmung im ersten Reibinsert) in Richtung der Zentralachse zur Sichtkontrolle der Verschraubung genutzt werden. Somit kann kontrolliert werden, ob die Schraube das erste Reibinsert zentral durchdringt, wenn sie im Loch sichtbar ist. Zusätzlich kann in durch das Loch eine Schraubensicherung über nachträglichen Klebereintrag in dem Loch / Bohrung erfolgen.

Folgende Kombinationen von Sandwichmaterialien und Insertmaterialien sind denkbar bzw. bevorzugt.

### 1.) Sandwich Duro (Duroplast):

Decklage: Duroplast (z.B. Phenol) / Kern: Duroplast (z.B. Nomex Honeycomb ) Insert: Thermoplast (TP) (z.B. Polyamid Reibinsert)
- Hier ist Serienkombination mit Polyamid, aber auch andere TP Materialien für Inserts denkbar
- Dies ergibt einen Formschluss zwischen Sandwichmaterialien und TP Schmelze des Inserts.

### 2.) Sandwich Duro-TP:

Decklage: Duroplast (z.B. Phenol) / Kern: Thermoplast: (z.B. PESU Wabe oder Schaum) Insert: Thermoplast (z.B. PESU Reibinsert)
- Bei nicht Monomaterial TP Sandwich ist ein Insert aus demselben TP Material wie Kernmaterial bevorzugt
- Dies ergibt Stoff- und Formschluss zwischen Kernmaterial und TP Schmelze des Inserts

### 3.) Sandwich Mono TP:

Decklage: Thermoplast (z.B. PEI) / Kern: Thermoplast: (z.B. PEI Wabe oder Schaum) Insert: Thermoplast (z.B. PEI Reibinsert)
- Bei Monomaterial TP Sandwich ist ein Insert aus demselben TP Material bevorzugt
- Dies ergibt Stoff- und Formschluss zwischen Sandwichmaterialien (Decklage und Kern) und TP Schmelze des Inserts

Hier ist eine Recyklierbarkeit durch TP Monomaterial erleichtert

### 4.) Sandwich nicht Mono TP:

Decklage: Thermoplast (z.B. PEI) / Kern: Thermoplast: (z.B. PESU Wabe oder Schaum) Insert: Thermoplast (z.B. PESU Reibinsert)
- Bei nicht Monomaterial TP Sandwich ist ein Insert aus demselben TP Material wie Kernmaterial bevorzugt
- Es ergibt sich ein Stoff- und Formschluss zwischen Kernmaterial und TP Schmelze des Inserts.

Parameter im Rahmen der Erfindung sind:
Insertgrößen / Decklagenstärke / Sandwichbeschnitt / Setzparameter
   - Eine Variation des Insertdurchmessers ergibt
      - Anpassung der Krafteinleitung in die Eckverbindung
      - anpassbaren Füllgrad Sandwichstruktur (TP Schmelze)
      - eine Toleranzanpassung: Beschnitt / Bohrung / Winkel / Eindringtiefe möglicher Verschraubung
   - Eine Variation der Inserthöhe (> Sandwichdicke) ergibt
      - eine Anpassung der Krafteinleitung in die Eckverbindung
      - anpassbaren Füllgrad Sandwichstruktur (TP Schmelze)
   - Eine Variation von Decklagenstärke / Kernmaterialien ergibt:
      - eine Anpassung der Krafteinleitung in die Eckverbindung
      - anpassbaren Füllgrad Sandwichstruktur (TP Schmelze)
Hieraus ergibt sich eine Änderung der Setzparameter
   - Eine Variation der Setzparameter (Rotationsgeschwindigkeit / Vorschub / Kraft) ergibt
      - eine Anpassung der Krafteinleitung in die Eckverbindung
      - anpassbaren Füllgrad Sandwichstruktur (TP Schmelze)
   - Eine Variation im Sandwichbeschnitt (Löcher vorbohren an Insertposition: Ja oder Nein ?) ergibt
      - eine Anpassung der Krafteinleitung in die Eckverbindung
      - anpassbaren Füllgrad Sandwichstruktur (TP Schmelze)

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: zwei Sandwichplatten einer Sandwichanordnung beim Übergang vom Rohzustand in den Fertigzustand,
- Figur 2: die beiden Sandwichplatten aus Figur 1 im Fertigzustand, wenn diese in einem Montagezustand die Sandwichanordnung bilden,
- Figur 3: einen Grundkörper eines Gepäckfachs für ein Flugzeug mit der erfindungsgemäßen Sandwichanordnung gemäß Figuren 1 und 2,
- Figur 4: eine alternative Sandwichanordnung mit Ansicht des Wabenkerns,
- Figur 5: das Detail V aus Figur 4
- Figur 6a: eine alternative Sandwichanordnung mit Winkel zwischen den beiden Sandwichplatten größer 90°,
- Figur 6b: eine alternative Sandwichanordnung mit Winkel zwischen den beiden Sandwichplatten kleiner 90°,
- Figur 7: eine alternative Sandwichanordnung mit Passkonturen.

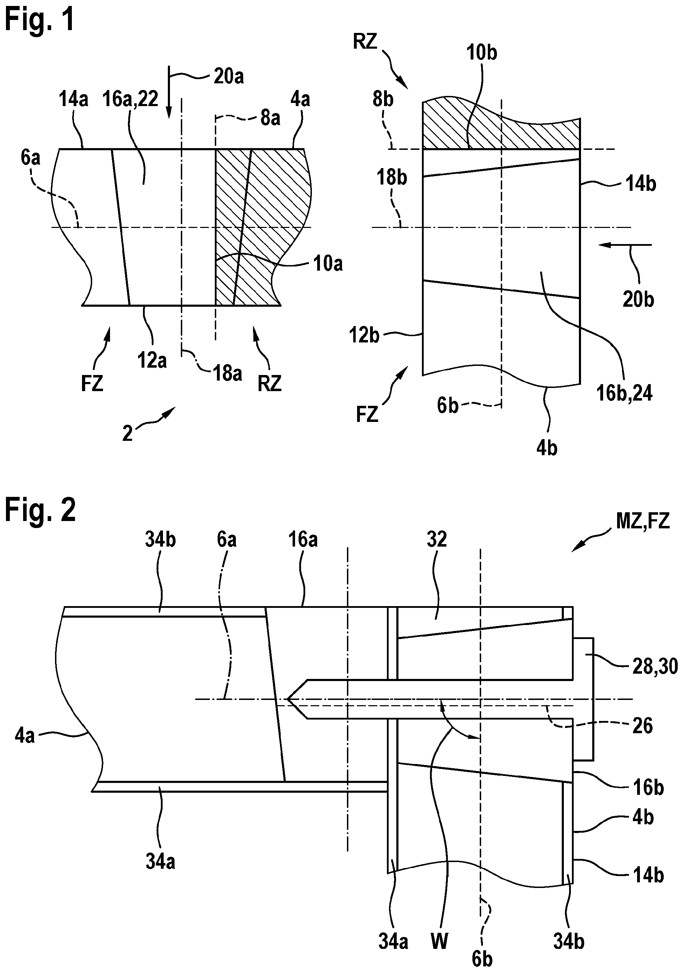

Figur 1 zeigt in einer Schnittdarstellung Teile einer Sandwichanordnung 2, nämlich eine erste Sandwichplatte 4a und eine zweite Sandwichplatte 4b, die sich jeweils in einem Rohzustand RZ befinden. Die Sandwichplatten 4a,b erstrecken sich jeweils flächig entlang einer jeweiligen ersten Erstreckungsebene 6a und zweiten Erstreckungsebene 6b. Die Erstreckungsebenen 6a,b sowie die Sandwichplatten 4a,b erstrecken sich in ihrer zweiten Dimension jeweils senkrecht zur Blattebene. Den beiden Sandwichplatten 4a,b ist eine jeweilige Schnittfläche 8a,b zugeordnet, die sich in ihrer zweiten Dimension ebenfalls senkrecht zur Blattebene erstreckt. Von dem Rohzustand RZ in einen Fertigzustand FZ gelangen die Sandwichplatten 4a,b, indem sie jeweils entlang der Schnittfläche 8a,b beschnitten werden, sodass die in Figur 1 jeweils schraffiert dargestellten Bestandteile der Sandwichplatten 4a,b abgeschnitten, entfernt bzw. abgetragen werden.

Im Fertigzustand FZ sind also die Sandwichplatten 4a,b entlang den Schnittflächen 8a,b beschnitten und bilden an der entsprechenden Schnittkante eine jeweilige Stirnseite 10a,b aus.

Im Fertigzustand FZ weisen somit die beiden Sandwichplatten 4a,b die jeweiligen Stirnseiten 10a,b sowie je eine erste Flachseite 12a,b und je eine zweite Flachseiten 14a,b auf. Die Stirnseiten 10a,b verbinden hierbei jeweils die ersten Flachseiten 12a,b mit den zweiten Flachseiten 14a,b.

In beide Sandwichplatten 4a,b ist je ein Reibinsert 16a,b eingebracht. Jedes der Reibinserts 16a,b weist eine Zentralachse 18a,b auf. Im eingebrachten Zustand verlaufen die Zentralachse 18a,b senkrecht zu den jeweiligen Erstreckungsebenen 6a,b. Das Einbringen der Reibinserts 16a,b in die Sandwichplatten 4a,b erfolgt fachüblich durch Rotation um die Zentralachse 18a,b und jeweiligen axialen Druck sowie Vorschub in Eindringrichtung (Pfeile 20a,b) bezüglich der Sandwichplatten 4a,b. Vorliegend erfolgt das Einbringen an den jeweiligen zweiten Flachseiten 14a,b. Die beiden Reibinserts 16a,b sind jeweils von den zweiten Flachseiten 14a,b her in die Sandwichplatten 4a,b eingebracht.

Das erste Reibinsert 16a stellt ein Verbindungsziel 22 dar und ist als solches in die erste Sandwichplatte 4a eingebracht. Die Einbringung erfolgt im Rohzustand RZ der Sandwichplatte 4a. Die Einbringen erfolgt derart, dass es im Rohzustand RZ beiderseits der Schnittfläche 8a liegt und so in Fertigzustand FZ zusammen mit der restlichen ersten Sandwichplatte 4a entlang der Schnittfläche 8a beschnitten wird bzw. ist. Somit wird auch der in Figur 1 schraffiert dargestellte Teil des ersten Reibinserts 16a beim Beschnitt entfernt und ist im Fertigzustand FZ nicht mehr vorhanden. Damit bildet das erste Reibinsert 16a einen Teil der Stirnseite 10a aus.

Das zweite Reibinsert 16b ist als Verbindungspartner 24 des Verbindungsziels 22 in die zweite Sandwichplatte 4b eingebracht. Die Einbringung erfolgt hier ebenfalls im Rohzustand RZ der zweiten Sandwichplatte 4b. Allerdings wird das zweite Reibinsert 16b entfernt von der Schnittfläche 8b platziert, sodass es beim Beschneiden der Sandwichplatte 4b nicht beschnitten wird, sondern vollständig erhalten bleibt.

Das zweite Reibinsert 16b ist also im Fertigzustand FZ unbeschnitten.

Alternativ wäre es aber auch möglich, das Reibinsert 16b mitzubeschneiden. Dies erfolgt in Abhängigkeit der Größe und erwünschtem oder nicht erwünschtem Überstand des Reibinserts 16b.

In einer alternativen Ausführungsform kann auch zuerst der Fertigzustand FZ der Sandwichplatte 4b hergestellt werden bzw. Sandwichplatte 4b alternativ bereits im Fertigzustand FZ bereitgestellt werden. Die Einbringung des Reibinserts 16b kann dann in die zweite Sandwichplatte 4b erfolgen, wenn sich diese bereits im Fertigzustand FZ befindet.

Figur 2 zeigt nun einen Montagezustand MZ der Sandwichanordnung 2. Hier liegen die Sandwichplatten 4a,b beide im Fertigzustand FZ vor.

Die erste Sandwichplatte 4a liegt hier mit ihrer Stirnseite 10a an der ersten Flachseite 12b der zweiten Sandwichplatte 4b an. Figur 2 zeigt die Ziellage der beiden Reibinserts 16a,b in den Sandwichplatten 4a,b, die bereits beim Einbringen in die Sandwichplatten 4a,b gemäß Figur 1 berücksichtigt wurde bzw. sind diese entsprechend platziert worden. Die Platzierung in Figur 1 erfolgt nämlich in Vorausschau bzw. unter Berücksichtigung gemäß Figur 1 geplanten Beschnitts und des gemäß Figur 2 geplanten Montagezustandes MZ wie folgt: Im Montagezustand MZ sollen beide Reibinserts 16a,b derart in die Sandwichplatten 4a,b eingebracht sein, dass sie zusammen auf einer Verbindungsstrecke 26 liegen, die das erste Reibinsert 16a quer (hier sogar senkrecht) zu dessen Zentralachse 18a und das zweite Reibinsert 16b entlang (hier sogar parallel zu) dessen Zentralachse 18b durchsetzt. In Figur 2 ist die Verbindungsstrecke 26 zeichnerisch etwas neben der Zentralachse 18b eingezeichnet, um diese nicht zu überdecken, fällt jedoch tatsächlich mit dieser zusammen bzw. liegt auf dieser.

Im Montagezustand MZ sind die Sandwichplatten 4 a,b nun anhand eines mechanischen Verbindungsmittels 28, hier einer Schraube 30, aneinander befestigt. Dabei verbindet das Verbindungsmittels 28 die beiden Reibinserts 16a,b mechanisch fest miteinander, hier durch gegenseitige Verschraubung. Die Verbindungstrecke 26 verläuft vollständig innerhalb der Sandwichanordnung 2, hier außerdem vollständig innerhalb der beiden Reibinserts 16a,b.

Figur 2 zeigt dabei eine detailliertere Ansicht der Sandwichplatten 4a,b als Figur 1, nämlich dass diese aus einem Wabenkern 32 und beidseitig je einer Decklage 34a,b aufgebaut sind.

Die Reibinserts 16a,b liegen hier in dem Sinne "aneinander an", dass lediglich die mechanisch stabile Decklage 34a der zweiten Sandwichplatte 4b zwischen diesen liegt. Die Schraube 30 durchsetzt das erste Reibinsert 16a hier nur teilweise und das zweite Reibinsert 16b vollständig. Die Schraube 30 ist hierbei von der zweiten Flachseite 14b her der zweiten Sandwichplatte 4b eingebracht bzw. eingeschraubt.

Die beiden Sandwichplatten 4a,b sind im Montagezustand MZ bezüglich ihrer Erstreckungsebenen 6a,b in einem Winkel W von hier 90° zueinander angeordnet.

Vorliegend weisen sowohl das Kernmaterial des Wabenkerns 32 als auch die beiden Reibinserts 16a,b das gleiche Material auf, nämlich Thermoplast-Material.

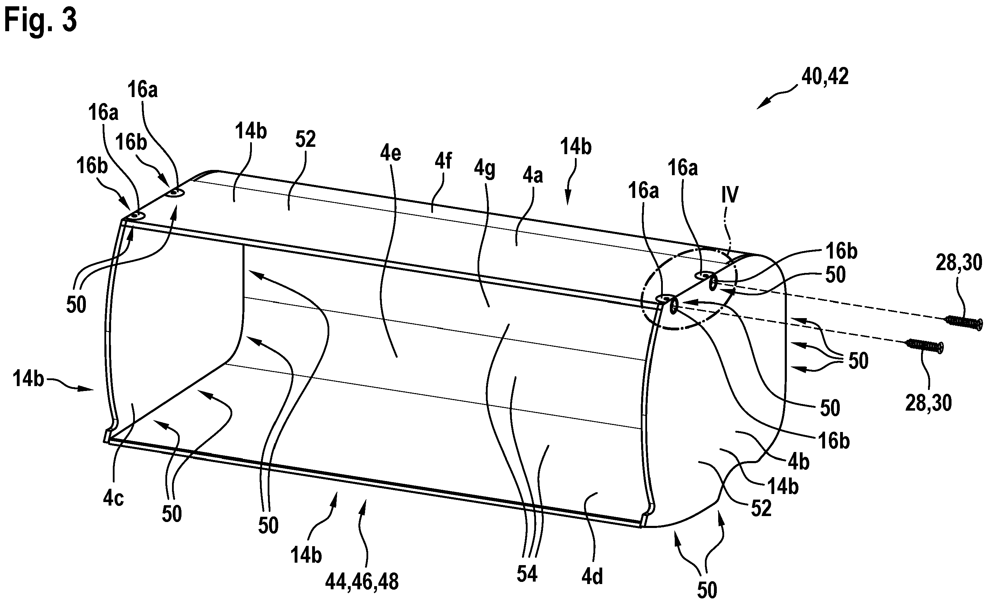

Figur 3 zeigt einen Ausschnitt aus einem Innenraum 40, hier einer Passagierkabine, eines Flugzeuges 42, hier eines Passagierflugzeuges. In dem Innenraum 40 ist ein Einbauteil 44 für das Flugzeug 42 bzw. den Innenraum 40 vorhanden, hier ein Grundkörper 48 eines Gepäckfaches 46. Der Grundkörper 48 ist fest an einer nicht dargestellten Grundstruktur des Flugzeuges 42 befestigt.

Das Einbauteil 44 in Form des Grundkörpers 48 besteht hier aus der Sandwichanordnung 2 gemäß der Figuren 1 und 2. Die Sandwichanordnung 2 enthält neben den in den Figuren 1 und 2 dargestellten Sandwichplatten 4a,b weitere Sandwichplatten 4c-g, die hier lediglich beispielhaft benannt sind. Alle Sandwichplatten 4a-f sind untereinander über die oben erläuterte Verbindung von je zwei Reibinserts 16a,b (Reibinsert-Paar) mechanisch fest miteinander verbunden sind. In Figur 3 ist nochmals symbolisch dargestellt, wie vier erste Reibinserts 16a in die erste Sandwichplatte 4a und zwei zweite Reibinserts 16b in die Sandwichplatte 4b und zwei weitere, in der Figur verdeckte zweite Reibinsert 16 B in die Sandwichplatte 4c eingebracht sind. Jede der vier Paarung von einem ersten und einem zweiten Reibinsert 16a,b ist mithilfe je eines Verbindungsmittels 28, hier wieder in Form einer Schraube 30, verschraubt. Die vier Schrauben 30 sind nur symbolisch als eine solche dargestellt.

So sind die Sandwichplatten 4a-c miteinander mechanisch fest verbunden. Weitere nicht näher dargestellte Paarungen von Reibinserts 16a,b sind an entsprechenden weiteren Verbindungsstellen 50 im Einbauteil 44 vorhanden, von denen lediglich einige beispielhaft durch Pfeile angedeutet sind.

An sämtlichen Verbindungsstellen 50 sind die Reibinserts 16a,b in den jeweiligen Sandwichplatten 4a-g jeweils von den zweiten Flachseiten 14a,b,... her eingebracht, so dass diese an Wandlungen 52 des Einbauteils 44 liegen, welche im Einbauzustand im Flugzeug 42 sichtverdeckt sind. Entsprechend können diese Wandlungen 52 nicht von Personen bzw. Passagieren eingesehen werden. Eingesehen werden kann jedoch eine Innenwand 54 des Grundkörpers 48, die jedoch ausschließlich aus ersten Flachseiten 12a,b,... der Sandwichplatten 4a-g gebildet sind, an denen keine Reibinserts 16a,b sichtbar sind. Somit entsteht ein optisch äußerst ansprechendes Einbauteil 44.

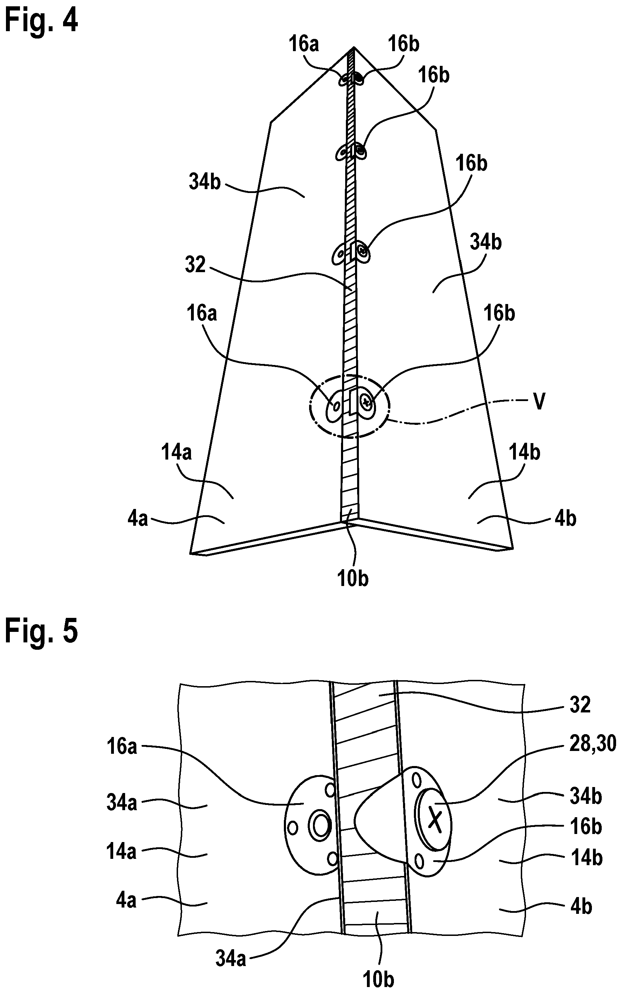

Hierzu erläuternd zeigt Figur 4 exemplarisch einen Ausschnitt IV aus Figur 3, der einen ausgeschnittenen Teil des Grundkörpers 48 zeigt. Hier ist besser zu erkennen, dass insgesamt vier Verbindungsstellen 50 aus je einem ersten und zweiten Reibinsert 16a,b gebildet sind, um die Sandwichplatten 4a,b zu verbinden. Figur 4 zeigt dabei eine Ausführungsform, bei der auch in die zweite Sandwichplatte 4b die zweiten Reibinserts 16b zunächst im Rohzustand RZ eingebracht wurden und im Fertigzustand FZ teilweise beschnitten sind und somit einen Bestandteil der Stirnseite 10b bilden.

Figur 5 zeigt hierzu erläuternd das Detail V aus Figur 4.

In den Figuren 4 und 5 ist insbesondere der Wabenkern 32 sowie die Decklagen 34a,b zu erkennen.

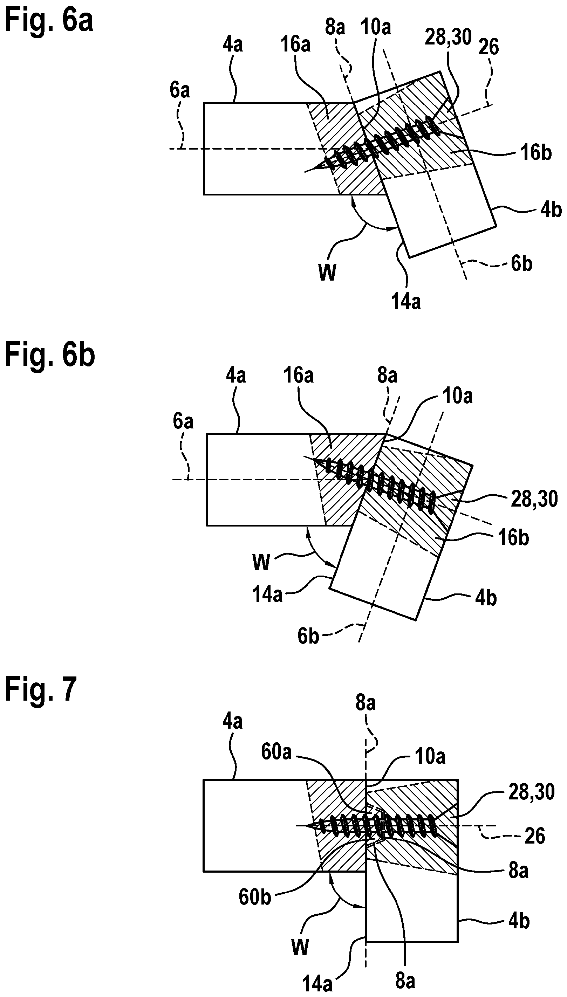

Figur 6a zeigt eine alternative Sandwichanordnung 2, bei der die Sandwichplatte 4a entlang einer schräg verlaufenden Schnittfläche 8a beschnitten ist, um eine schräge Stirnseite 10a zu schaffen. Da diese wiederum gerade auf der ersten Flachseite 14a der zweiten Sandwichplatte 4b aufliegt, ergibt sich hier ein Winkel W zwischen den Erstreckungsebenen 6a,b von mehr als 90°.

Figur 6b zeigt eine weitere Ausführungsform einer Sandwichanordnung 2, bei der die Sandwichplatte 4a gemäß Schnittfläche 8a in einem alternativen Winkel W beschnitten ist, sodass sich schlussendlich ein Winkel W von kleiner 90° zwischen den beiden Sandwichplatten 4a,b bzw. deren Erstreckungsebenen 6a,b einstellt.

Figur 7 zeigt eine weitere alternative Ausführungsform einer Sandwichanordnung 2. Hier weisen das erste Reibinsert 16a eine erste Passkontur 60a und das Reibinsert 16b eine zweite Passkontur 60b auf. Die Passkonturen sind 60a,b sind gegenseitig korrespondierend zueinander ausgeführt, hier als Positiv- und Negativform. So greifen diese im dargestellten Montagezustand MZ formschlüssig ineinander. Die Passkontur 60a ist hierbei ein aus der restlichen bzw. umgebenden Stirnseite 10a vorspringender Vorsprung, die hierzu korrespondierende Passkontur 60b eine von der restlichen zweiten Stirnseite 10b zurückgesetzte Aufnahme bzw. Einbuchtung / Einsenkung für den Vorsprung.

### Bezugszeichenliste

- 2: Sandwichanordnung
- 4a-g: Sandwichplatte
- 6a,b: Erstreckungsebene
- 8a,b: Schnittfläche
- 10a,b: Stirnseite
- 12a,b: erste Flachseite
- 14a,b: zweite Flachseite
- 16a,b: Reibinsert
- 18a,b: Zentralachse
- 20a,b: Pfeil (Einbringen Reibinsert)
- 22: Verbindungsziel
- 24: Verbindungspartner
- 26: Verbindungsstrecke
- 28: Verbindungsmittel
- 30: Schraube
- 32: Wabenkern
- 34a,b: Decklage
- 40: Innenraum
- 42: Flugzeug
- 44: Einbauteil
- 46: Gepäckfach
- 48: Grundkörper
- 50: Verbindungsstellen
- 52: Wandung
- 54: Innenwand
- 60a,b: Passkontur

- RZ: Rohzustand
- FZ: Fertigzustand
- MZ: Montagezustand
- W: Winkel

## Patentansprüche

1. Sandwichanordnung (2) für einen Innenraum (40) eines Flugzeuges (42),
- mit einer ersten (4a) und einer zweiten Sandwichplatte (4b), die sich jeweils entlang einer Erstreckungsebene (6a,b) flächig erstrecken,
- wobei wenigstens die erste Sandwichplatte (4a) in einem Rohzustand (RZ) hergestellt und aus diesem durch Beschnitt in einen Fertigzustand (FZ) gebracht ist, wobei der Beschnitt entlang einer Schnittfläche (8a,b) ausgeführt ist und durch den Beschnitt eine jeweilige Stirnseite (10a,b) an der jeweiligen Sandwichplatte (4a,b) gebildet ist,
- wobei im Fertigzustand (FZ) beide Sandwichplatten (4a,b) je zwei Flachseiten (12a,b, 14a,b) und je eine die Flachseiten (12a,b, 14a,b) verbindende Stirnseite (10a,b) aufweisen,
- wobei in beide Sandwichplatten (4a,b) je ein Reibinsert (16a,b) eingebracht ist, das je eine Zentralachse (18a,b) aufweist, die quer zur jeweiligen Erstreckungsebene (6a,b) verläuft,
- wobei die Zentralachse eine Drehachse ist, um welche das Reibinsert beim Einbringen in die Sandwichplatte rotiert ist,
- wobei die Zentralachse eine solche ist, in Richtung der zum Einbringen des Reibinserts in die Sandwichplatte Druck auf das Reibinsert ausgeübt ist,
- wobei die Zentralachse eine Symmetrieachse in Bezug auf die rotationssymmetrische Form des Reibinserts ist,
- wobei das erste Reibinsert (16a) als ein Verbindungsziel (22) in die erste Sandwichplatte (4a) im Rohzustand (RZ) derart eingebracht ist, dass es beiderseits der Schnittfläche (8a) liegt und im Fertigzustand (FZ) zusammen mit der ersten Sandwichplatte (4a) unter Ausbildung der Stirnseite (10a) beschnitten ist,
- wobei das zweite Reibinsert (16b) als ein Verbindungspartner (24) in die zweite Sandwichplatte (4b) eingebracht ist,
- wobei in einem Montagezustand (MZ) der Sandwichanordnung (2) beide Sandwichplatten (4a,b) im Fertigzustand (FZ) vorliegen und die erste Sandwichplatte (4a) mit ihrer Stirnseite (10a) an der ersten Flachseite (12a) der zweiten Sandwichplatte (4b) anliegt,
- wobei beide Reibinserts (16a,b) derart in die Sandwichplatten (4a,b) eingebracht sind, dass sie im Montagezustand (MZ) zusammen auf einer Verbindungsstrecke (26) liegen, die das erste Reibinsert (16a) quer zu seiner Zentralachse (18a) und das zweite Reibinsert (16b) entlang seiner Zentralachse (18b) durchsetzt,
- wobei im Montagezustand (MZ) die Sandwichplatten (4a,b) anhand eines die Reibinserts (16a,b) miteinander mechanisch fest verbindenden mechanischen Verbindungsmittels (28) aneinander befestigt sind.

2. Sandwichanordnung (2) nach Anspruch 1,
**dadurch gekennzeichnet, dass**
das zweite Reibinsert (16b) im Fertigzustand (FZ) unbeschnitten ist.

3. Sandwichanordnung (2) nach einem der vorhergehenden Ansprüche,
**dadurch gekennzeichnet, dass**
die Verbindungstrecke (26) vollständig innerhalb der Sandwichanordnung (2) verläuft.

4. Sandwichanordnung (2) nach einem der vorhergehenden Ansprüche,
**dadurch gekennzeichnet, dass**
das Verbindungsmittel (28) eine im Montagezustand (MZ) das erste Reibinsert (16a) zumindest teilweise und das zweite Reibinsert (16b) vollständig durchsetzende Schraube (30) ist.

5. Sandwichanordnung (2) nach einem der vorhergehenden Ansprüche,
**dadurch gekennzeichnet, dass**
die beiden Reibinserts (16a,b) jeweils von der zweiten Flachseite (14a,b) her in die jeweilige Sandwichplatte (4a,b) eingebracht sind.

6. Sandwichanordnung (2) nach einem der vorhergehenden Ansprüche,
**dadurch gekennzeichnet, dass**
die Sandwichplatten (4a,b) im Montagezustand (MZ) bezüglich ihrer Erstreckungsebenen (6a,b) in einem Winkel (W) zwischen 70° und 110° zueinander angeordnet sind.

7. Sandwichanordnung (2) nach einem der vorhergehenden Ansprüche,
**dadurch gekennzeichnet, dass**
erstes (16a) und zweites Reibinsert (16b) erste und zweite gegenseitig korrespondierende Passkonturen (60a,b) aufweisen, die im Montagezustand (MZ) formschlüssig ineinandergreifen.

8. Sandwichanordnung (2) nach einem der vorhergehenden Ansprüche,
**dadurch gekennzeichnet, dass**
wenigstens eine der Sandwichplatten (4a,b) wenigstens an einem Einbringungsort des Reibinserts (16a,b) ein Material aufweist, das gleich dem Material des Reibinserts (16a,b) ist.

9. Einbauteil (44) für ein Flugzeug (42),
mit der Sandwichanordnung (2) nach einem der vorhergehenden Ansprüche im Montagezustand.

10. Einbauteil (44) nach Anspruch 9,
**dadurch gekennzeichnet, dass**
das Einbauteil (44) ein zumindest Teil eines Gepäckfaches (46) ist.

11. Einbauteil (44) einem der Ansprüche 9 bis 10 in Verbindung mit Anspruch 5, **dadurch gekennzeichnet, dass**
das Einbauteil (44) eine beim bestimmungsgemäßen Einbau im Flugzeug (42) sichtverdeckte Wandung (52) aufweist, wobei zumindest solche Abschnitte der zweiten Flachseiten (14a,b), die die Reibinserts (16a,b) aufweisen, Teile der Wandung (52) sind.

12. Verfahren zum Herstellen der Sandwichanordnung (2) nach einem der Ansprüche 1 bis 8 oder des Einbauteils (44) nach einem der Ansprüche 9 bis 11, bei dem
- die erste Sandwichplatte (4a) im Rohzustand (RZ) bereitgestellt wird,
- das erste Reibinsert (16a) unter Rotation um seine Zentralachse (18a) in die erste Sandwichplatte (4a) in Richtung quer zu deren Erstreckungsebene (6a) derart eingebracht wird, dass es beiderseits der Schnittfläche (8a) liegt,
- die erste Sandwichplatte (4a) einschließlich des ersten Reibinserts (16a) unter Bildung der Stirnseite (10a) entlang der Schnittfläche (8a) beschnitten wird und so in den Fertigzustand (FZ) gelangt,
- die zweite Sandwichplatte (4b) im Rohzustand (RZ) oder Fertigzustand (FZ) bereitgestellt wird,
- das zweite Reibinsert (16b) in die zweite Sandwichplatte (4b) unter Rotation um seine Zentralachse (18b) in Richtung quer zu ihrer Erstreckungsebene (6b) eingebracht wird,
- gegebenenfalls die zweite Sandwichplatte (4b) beschnitten wird, um in den Fertigzustand (FZ) zu gelangen,
- zur Schaffung des Montagezustands (MZ) die erste Sandwichplatte (4a) mit ihrer Stirnseite (10a) an der ersten Flachseite (12b) der zweiten Sandwichplatte (4b) angelegt wird, wobei die Reibinserts (16a,b) auf der Verbindungsstrecke (26) zu liegen kommen,
- die Sandwichplatten (4a,b) anhand des Verbindungsmittels (28) aneinander befestigt werden, indem die Reibinserts (16a,b) durch das Verbindungsmittel (28) miteinander mechanisch fest verbunden werden.

## Claims

1. Sandwich arrangement (2) for an interior (40) of an aircraft (42),
- with a first (4a) and a second sandwich panel (4b), each extending flatly along a plane of extent (6a, b),
- wherein at least the first sandwich panel (4a) is manufactured in a raw state (RZ) and is transferred from this by trimming into a finished state (FZ), wherein the trimming is carried out along a cutting surface (8a, b), and a respective end side (10a, b) is formed on the respective sandwich panel (4a, b) by the trimming,
- wherein, in the finished state (FZ), the two sandwich panels (4a, b) each have two flat sides (12a, b, 14a, b) and one end side (10a, b) connecting the flat sides (12a, b, 14a, b),
- wherein a friction insert (16a, b) is inserted into each of the two sandwich panels (4a, b), each friction insert having a central axis (18a, b) which runs transversely with respect to the respective plane of extent (6a, b),
- wherein the central axis is a rotational axis, around which the friction insert is rotated when inserted into the sandwich panel,
- wherein the central axis is such that, in the direction thereof, pressure is applied to the friction insert for inserting the friction insert into the sandwich panel,
- wherein the central axis is a symmetry axis with respect to the rotationally symmetrical shape of the friction insert,
- wherein the first friction insert (16a) is introduced as a connecting target (22) into the first sandwich panel (4a) in the raw state (RZ) in such a way that it lies on both sides of the cutting surface (8a) and is trimmed in the finished state (FZ) together with the first sandwich panel (4a) to form the end side (10a),
- wherein the second friction insert (16b) is inserted as a connecting partner (24) into the second sandwich panel(4b),
- wherein, in an assembled state (MZ) of the sandwich assembly (2), the two sandwich panels (4a, b) are in the finished state (FZ), and the first sandwich panel (4a) bears with its end side (10a) against the first flat side (12a) of the second sandwich panel (4b),
- wherein the two friction inserts (16a, b) are introduced into the sandwich panels(4a, b) in such a way that they lie together in the assembled state (MZ) on a connecting section (26), which passes through the first friction insert (16a) transversely with respect to its central axis (18a) and through the second friction insert (16b) along its central axis (18b),
- wherein, in the assembled state (MZ), the sandwich panels(4a, b) are fastened to each other by means of a mechanical connecting means (28) which connects the friction inserts (16a, b) mechanically fixedly to each other.

2. Sandwich arrangement (2) according to Claim 1, **characterized in that**
the second friction insert (16b) is untrimmed in the finished state (FZ).

3. Sandwich arrangement (2) according to either of the preceding claims,
**characterized in that**
the connecting section (26) runs completely within the sandwich arrangement (2).

4. Sandwich arrangement (2) according to one of the preceding claims,
**characterized in that**
the connecting means (28) is a screw (30) which, in the assembled state (MZ), passes through the first friction insert (16a) at least partially and the second friction insert (16b) fully.

5. Sandwich arrangement (2) according to one of the preceding claims,
**characterized in that**
the two friction inserts (16a, b) are each inserted from the second flat side (14a, b) into the respective sandwich panel(4a, b).

6. Sandwich arrangement (2) according to one of the preceding claims,
**characterized in that**
the sandwich panels (4a, b) are arranged in the assembled state (MZ) with respect to their planes of extent (6a, b) at an angle (W) between 70° and 110° with respect to each other.

7. Sandwich arrangement (2) according to one of the preceding claims,
**characterized in that**
the first (16a) and second friction insert (16b) have first and second mutually corresponding fitting contours (60a, b), which are positively interlocked in the assembled state (MZ).

8. Sandwich arrangement (2) according to one of the preceding claims,
**characterized in that**
at least one of the sandwich panels(4a, b) comprises, at least at an insertion point of the friction insert (16a, b), a material which is identical to the material of the friction insert (16a, b).

9. Installation part (44) for an aircraft (42),
with the sandwich arrangement (2) according to one of the preceding claims in the assembled state.

10. Installation part (44) according to Claim 9, **characterized in that**
the installation part (44) is at least part of an overhead bin (46).

11. Installation part (44) according to either of Claims 9 or 10 in combination with Claim 5,
**characterized in that**
the installation part (44) has a wall (52) which is hidden from view when installed correctly in the aircraft (42), wherein at least those sections of the second flat sides (14a, b) which have the friction inserts (16a, b) are parts of the wall (52).

12. Method for producing the sandwich arrangement (2) according to one of Claims 1 to 8 or the installation part (44) according to one of Claims 9 to 11, in which method
- the first sandwich panel (4a) is provided in the raw state (RZ),
- the first friction insert (16a) is inserted into the first sandwich panel(4a) in the direction perpendicular with respect to its plane of extent (6a), with rotation around its central axis (18a), in such a way that it lies on both sides of the cutting surface (8a),
- the first sandwich panel (4a) including the first friction insert (16a) is trimmed along the cutting surface (8a) to form the end side (10a) and thus reaches the finished state (FZ),
- the second sandwich panel (4b) is provided in the raw state (RZ) or finished state (FZ),
- the second friction insert (16b) is inserted into the second sandwich plate (4b) by rotating around its central axis (18b) in the direction perpendicular with respect to its plane of extent (6b),
- if necessary, the second sandwich panel (4b) is trimmed to reach the finished state (FZ),
- in order to create the assembled state (MZ), the first sandwich panel (4a) is placed with its end side (10a) on the first flat side (12b) of the second sandwich panel (4b), wherein the friction inserts (16a, b) come to lie on the connecting section (26),
- the sandwich panels (4a, b) are fastened to each other by means of the connecting means (28), by the friction inserts (16a, b) being mechanically fixedly connected to each other by means of the connecting means (28).

## Revendications

1. Agencement en sandwich (2) destiné à un espace intérieur (40) d'un aéronef (42),
- comprenant une première (4a) et une deuxième plaque de sandwich (4b), qui s'étendent chacune de manière surfacique le long d'un plan d'extension (6a, b),
- au moins la première plaque de sandwich (4a) étant fabriquée dans un état brut (RZ) et amenée à partir de celui-ci dans un état fini (FZ) par découpe, la découpe étant réalisée le long d'une surface de coupe (8a, b) et la découpe formant un côté frontal respectif (10a, b) sur la plaque de sandwich respective (4a, b),
- les deux plaques de sandwich (4a, b) présentant, à l'état fini (FZ), chacune deux côtés plats (12a, b, 14a, b) et un côté frontal (10a, b) reliant les côtés plats (12a, b, 14a, b),
- un insert de friction (16a, b) étant intégré dans chacune des deux plaques de sandwich (4a, b), lequel présente un axe central respectif (18a, b) s'étendant transversalement au plan d'extension respectif (6a, b),
- l'axe central étant un axe de rotation autour duquel l'insert de friction a tourné lors de son intégration dans la plaque de sandwich,
- l'axe central étant un axe dans la direction duquel une pression a été exercée sur l'insert de friction en vue de l'intégration de l'insert de friction dans la plaque de sandwich,
- l'axe central étant un axe de symétrie par rapport à la forme à symétrie de révolution de l'insert de friction,
- le premier insert de friction (16a) étant intégré en tant que cible de liaison (22) dans la première plaque de sandwich (4a) à l'état brut (RZ) de telle manière qu'il est situé de part et d'autre de la surface de coupe (8a) et qu'à l'état fini (FZ), il est découpé conjointement avec la première plaque de sandwich (4a) en formant le côté frontal (10a),
- le deuxième insert de friction (16b) étant intégré en tant que partenaire de liaison (24) dans la deuxième plaque de sandwich (4b),
- dans un état de montage (MZ) de l'agencement en sandwich (2), les deux plaques de sandwich (4a, b) se présentant à l'état fini (FZ) et la première plaque de sandwich (4a) étant en appui, par son côté frontal (10a), contre le premier côté plat (12a) de la deuxième plaque de sandwich (4b),
- les deux inserts de friction (16a, b) étant intégrés dans les plaques de sandwich (4a, b) de telle manière qu'à l'état de montage (MZ), ils sont situés ensemble sur un trajet de liaison (26), lequel traverse le premier insert de friction (16a) transversalement à son axe central (18a) et le deuxième insert de friction (16b) le long de son axe central (18b),
- les plaques de sandwich (4a, b) étant, à l'état de montage (MZ), fixées l'une à l'autre à l'aide d'un moyen de liaison mécanique (28) reliant mécaniquement de manière fixe les inserts de friction (16a, b) l'un à l'autre.

2. Agencement en sandwich (2) selon la revendication 1,
**caractérisé en ce que**
le deuxième insert de friction (16b) est non découpé à l'état fini (FZ).

3. Agencement en sandwich (2) selon l'une quelconque des revendications précédentes,
**caractérisé en ce que**
le trajet de liaison (26) s'étend entièrement à l'intérieur de l'agencement en sandwich (2).

4. Agencement en sandwich (2) selon l'une quelconque des revendications précédentes,
**caractérisé en ce que**
le moyen de liaison (28) est une vis (30) qui traverse, à l'état de montage (MZ), au moins partiellement le premier insert de friction (16a) et entièrement le deuxième insert de friction (16b).

5. Agencement en sandwich (2) selon l'une quelconque des revendications précédentes,
**caractérisé en ce que**
les deux inserts de friction (16a, b) sont chacun intégrés dans la plaque de sandwich respective (4a, b) à partir du deuxième côté plat (14a, b).

6. Agencement en sandwich (2) selon l'une quelconque des revendications précédentes,
**caractérisé en ce que**
les plaques de sandwich (4a, b) sont disposées l'une par rapport à l'autre, à l'état de montage (MZ), selon un angle (W) compris entre 70° et 110° par rapport à leurs plans d'extension (6a, b).

7. Agencement en sandwich (2) selon l'une quelconque des revendications précédentes,
**caractérisé en ce que**
le premier insert de friction (16a) et le deuxième insert de friction (16b) présentent un premier et un deuxième contours d'ajustement correspondants (60a, b), qui s'engagent l'un dans l'autre par complémentarité de forme à l'état de montage (MZ).

8. Agencement en sandwich (2) selon l'une quelconque des revendications précédentes,
**caractérisé en ce que**
au moins l'une des plaques de sandwich (4a, b) présente, au moins à un emplacement d'intégration de l'insert de friction (16a, b), un matériau identique au matériau de l'insert de friction (16a, b).

9. Pièce d'installation (44) pour un aéronef (42), comprenant l'agencement en sandwich (2) selon l'une quelconque des revendications précédentes à l'état de montage.

10. Pièce d'installation (44) selon la revendication 9, **caractérisé en ce que**
la pièce d'installation (44) est au moins une partie d'un compartiment à bagages (46).

11. Pièce d'installation (44) selon l'une quelconque des revendications 9 à 10 en combinaison avec la revendication 5,
**caractérisé en ce que**
la pièce d'installation (44) présentant une paroi (52) masquée à la vue lors de l'installation conforme à sa destination dans l'aéronef (42), au moins les sections des deuxièmes côtés plats (14a, b) qui présentent les inserts de friction (16a, b) étant des parties de la paroi (52).

12. Procédé de fabrication de l'agencement en sandwich (2) selon l'une quelconque des revendications 1 à 8 ou de la pièce d'installation (44) selon l'une quelconque des revendications 9 à 11, dans lequel
- la première plaque de sandwich (4a) est mise à disposition à l'état brut (RZ),
- le premier insert de friction (16a) est intégré dans la première plaque de sandwich (4a), avec rotation autour de son axe central (18a), dans une direction transversale à son plan d'extension (6a), de telle manière qu'il est situé de part et d'autre de la surface de coupe (8a),
- la première plaque de sandwich (4a), y compris le premier insert de friction (16a), est découpée le long de la surface de coupe (8a) en formant le côté frontal (10a) et est ainsi amenée à l'état fini (FZ),
- la deuxième plaque de sandwich (4b) est mise à disposition à l'état brut (RZ) ou à l'état fini (FZ),
- le deuxième insert de friction (16b) est intégré dans la deuxième plaque de sandwich (4b), avec rotation autour de son axe central (18b), dans une direction transversale à son plan d'extension (6b),
- le cas échéant, la deuxième plaque de sandwich (4b) est découpée afin d'être amenée à l'état fini (FZ),
- en vue de créer l'état de montage (MZ), la première plaque de sandwich (4a) est appliquée, par son côté frontal (10a), contre le premier côté plat (12b) de la deuxième plaque de sandwich (4b), les inserts de friction (16a, b) venant à se trouver sur le trajet de liaison (26),
- les plaques de sandwich (4a, b) sont fixées l'une à l'autre à l'aide du moyen de liaison (28), par le fait que les inserts de friction (16a, b) sont reliés mécaniquement de manière fixe l'un à l'autre par le moyen de liaison (28).
